# EUROPEAN PATENT APPLICATION

(11) **EP 3 725 998 A1**
(43) Date of publication of application: **21.10.2020**
(21) Application number: 19170185.3
(22) Date of filing: 18.04.2019
(51) Int. Cl.: E21B 7/02, E21B 47/022, E21B 47/024, E21B 47/09

(54) **APPARATUS AND METHOD FOR DETERMINING POSITION OF DRILLING TOOL DURING DRILLING**

(71) Applicant: Sandvik Mining and Construction Oy, 33330 Tampere (FI)
(72) Inventor: Launis, Sirpa, 33311 Tampere (FI); LEINO, Timo, 33311 Tampere (FI); PIISPANEN, Juha, 33311 Tampere (FI); JUSSILA, Henna-Riitta, 33311 Tampere (FI)
(74) Representative: Sandvik

(57) **Abstract**

An apparatus and method of determining position of a drilling tool during drilling. The apparatus comprises a magnetic source (13) mounted to a rotating drilling tool (8) and at least three magnetometers (12a, 12b, 12c) which are located outside a drilled hole (2). Sensing data of rotating magnetic field is transmitted from the magnetometers to a control unit (CU) provided with a position calculation algorithm (21). The control unit is also provided with pose data of the magnetometers (25). The control unit compares the received sensing data and determines phase angles from the sensing data. The algorithm utilizes the phase angles and the known positions of the magnetometers when calculating the position.

## Description

### Background of the invention

The invention relates to an apparatus configured to determine location of a drilling tool during rock drilling. The apparatus utilizes magnetic field measurements.

The invention further relates to a rock drilling rig provided with the disclosed apparatus and to a method and computer program product for determining location of a drilling tool during rock drilling.

The field of the invention is defined more specifically in the preambles of the independent claims.

In mines and at other work sites different type of rock drilling rigs are used for drilling drill holes to rock material. The drilling rig comprises a drilling unit provided with a drilling machine and a drilling tool is connected to it. During the drilling the drilling tool is subjected to different forces whereby the drilling tool may move side wards and away from the planned drilling line. Then the finished drill hole deviates from the designed drill hole and may cause problems to procedures following the drilling. Therefore different devices and methods are disclosed for examining properties of the drilled holes. However, sensing properties of the drill hole during the drilling is problematic. Conditions inside the drill hole during the drilling are extremely harsh. Thereby no satisfying solution for tracking position of the drilling tool during the drilling is presently known.

### Brief description of the invention

An object of the invention is to provide a novel and improved apparatus and method for tracking the drilling tool during the drilling. A further object is provide a rock drilling rig equipped with such apparatus and a computer program for implementing the disclosed solution.

The apparatus according to the invention is characterized by the characterizing features of the first independent apparatus claim.

The rock drilling rig according to the invention is characterized by the characterizing features of the second independent apparatus claim.

The method according to the invention is characterized by the characterizing features of the independent method claim.

The computer program product according to the invention is characterized by the characterizing features of the third independent apparatus claim.

An idea of the disclosed solution is that position of a drilling tool is monitored during the drilling process.

The solution discloses a magnetic tracking system for sensing sideward or lateral position movements of the drilling tool. In the disclosed solution position sensing of the drilling tool is based on magnetism.

The apparatus comprises at least one magnetic source mounted to a rotating drilling tool. Further, the apparatus comprises at minimum three magnetometers and the magnetometers are located outside the drill hole. Sensing data of rotating magnetic field is transmitted from the magnetometers to a control unit provided with a position calculation algorithm. The control unit is also provided with basic data for the calculation, wherein the basic data comprises pose of the three or more magnetometers. The control unit receives sensing data from the magnetometers and determines phase difference between the received data. The determined phase differences correspond to phase angles between the magnetometers and the magnetic source. The control unit comprises a calculation program or algorithm execution of which calculates position of the drilling tool on the basis of the detected phase angles and the known poses of the magnetometers.

An advantage of the disclosed solution is that there is no need to use downhole instruments to determine the heading of a borehole. A further advantage is that the disclosed solution provides a measurement-while-drilling (MWD) solution i.e. the measurements are done during the drilling of the drill holes. The disclosed measurement process and arrangement does not hamper the drilling in any way. The measuring may be initiated at any time during the drilling, or the measurement process may be executed continuously during the drilling.

The disclosed system based on magnetism is suitable for all kind of drilling circumstances except situations where magnetic material or iron ore disturbs the sensing of the rotating magnetic field of the drilling tool.

A further advantage is that the magnetic field can be sensed from a very long distance. The rock material being drilled may be nonhomogeneous and may comprise different kind of rock material and different rock qualities, and still the sensing is not hampered when the disclosed solution is used.

Since the magnetometers are located outside the drill hole being examined, positioning of the magnetometers is easy and quick to make, and further, there are plenty of optional locations to be selected as the positions of the magnetometers.

The solution is also inexpensive since no extensive re-design needs to be done for the drilling equipment. Providing the drilling tool with one or more magnetic sources is sufficient and requires only minor modifications or extras to the existing drilling tools. It may even be possible to retrofit the magnets to the existing drilling components.

According to an embodiment, the disclosed position detection system may be calibrated or verified prior to initiating the actual drilling. Then the drilling tool with the magnetic source is positioned at a desired drill hole position and is aligned according to the desired drill hole direction. The drill hole position and direction may be pre-determined in a drilling pattern or excavation plan. A drilling unit may be supported against a rock surface and the drilling tool is rotated around its drilling axis. Then position of the drilling tool is calculated in accordance with the disclosed solution and the outcome may be compared to the position accurately known by the rock drilling rig.

According to an embodiment, the control unit may be configured to monitor changes in the phase angles and when pre-determined limits or rules are exceeded, the control unit may then calculate accurate position data.

According to an embodiment, the magnetic flux sensed by the magnetometers is examined in function to rotation angle of the drilling tool. Thus, the examination is not executed in function to time.

According to an embodiment, the control unit is configured to calculate two-dimensional (2D) data on position of the drilling tool on the basis of the detected phase angles and the input positions of the several magnetometers. In other words, the control unit calculates position changes in transverse directions relative to the drilling axis. The control unit may examine the situation in a two-dimensional plane.

According to an embodiment, the apparatus is without any electrical sensing devices mounted to the drilling tool. Thereby no electrical sensing devices are inserted together with the drilling tool inside the drill hole during the drilling.

According to an embodiment, the apparatus may be implemented in rotary drilling as well as in percussion drilling. Further, the apparatus is suitable to be used in connection with top hammer and down-the-hole drilling solutions. The disclosed solution may also be implemented in surface and underground drilling.

According to an embodiment, the measurements and the calculation of the position data are executed in real-time during the drilling.

According to an embodiment, the control unit is configured to take into consideration only rotating magnetic fields the rotating speed of which correspond to the rotational speed of the drilling tool. Thereby possible other magnetic fields may be filtered, separated and possibly ignored when seeking the rotating magnetic field of the drilling tool.

According to an embodiment, frequency of the detected alternating magnetic field is equal to the rotation speed of the drilling tool.

According to an embodiment, the disclosed solution may be implemented regardless of direction and purpose of the drill hole. Then the disclosed measurement may be executed for vertical drilling when downward or upward directed drill holes are drilled. Further, the measurement is also suitable for substantially horizontal drilling, such as to face drilling in tunneling.

According to an embodiment, positions of the magnetometers may be freely selected as long as their position and orientation is determined and input to the control system before initiating the measurements. Positions of the magnetometers may be determined by means of external position measuring systems, for example. The magnetometers may possibly be kept in the same known position when several neighboring drill holes are drilled. This way the magnetometers needs not to be repositioned after each drill hole is finished. In other words, the known pose setting of the magnetometers is utilized for several separate drill holes.

According to an embodiment, the apparatus may comprises three, four or even more magnetometers. Three is the minimum number of the magnetometers since otherwise there is too little initial position and angle data to solve the position calculation trigonometrically. When implementing greater number of the magnetometers, accuracy of the measurements may be verified by comparing even more several sensing results. This embodiment may also be useful when operating at work sites where issues causing disturbances to the magnetic fields occurs.

According to an embodiment, the control unit is provided with a computer program product or algorithm for executing the needed calculations. The calculation program or software implements triangulation and trigonometry in the calculation.

According to an embodiment, the received sensing data is examined by determining maximum strength values of the received magnetic field data and corresponding rotation angle of the magnetic source relative to the examined magnetometer at that peak value being detected. Further, the phase angle between the reference sensing data and any new sensing data is determined by comparing the rotation angles of the detected maximum strength values. In other words, this embodiment utilizes sensed peak values.

According to an embodiment, the control unit may or may not detect the above mentioned phase angle and phase difference by examining the peak values of the sensed magnetic field. Alternatively, minimum strength values may be used for the detection.

According to an embodiment, a further alternative for determining the phase angles and phase differences is to analyze a wider sample of the sensing data or to continuously monitor the sensing data for detecting the phase difference and phase angle. Then not only peak or other single values are examined, but instead the analysis includes longer period of time. Alternatively, more than one wave lengths may be examined. The analysis may take into account one or more wave lengths sensed before momentum of the calculation. The calculation of the phase angles may be based on signal processing methods. Alternatively, or in addition to, mathematical analysis, such as vector algebra and Fourier transformation, may be implemented for determining the phase differences and phase angles. To sum up, there are several alternative ways for analyzing the sensing data of the magnetometers.

According to an embodiment, the magnetometers are located on a rock surface surrounding the drill hole being drilled. Then mounting of the magnetometers on the surface is easy and quick.

According to an embodiment, the magnetometers are located on surface level. Then data transfer between the magnetometers and the control unit is easy to arrange. Further, when the magnetometers are surface mounted, they are not subjected to harsh underground circumstances. Thereby it is possible to use standard commercially available magnetometers for the measuring.

According to an embodiment, the magnetometers are located on a horizontal or substantially horizontal plane.

According to an embodiment, the known positions of magnetometers and the reference position of the magnetic source define a two-dimensional plane where the position change of the magnetic source is examined. The positions may be defined in X-Y coordinates.

According to an embodiment, transverse distances of the magnetometers from the drill hole is selected in relation to the designed depth of the finished drill hole. The distances are usually several meters, and may be up to 10 - 20 meters, for example.

According to an embodiment, transverse distances of one or more magnetometers from the drill hole may in special cases be relatively small. Then one or more magnetometers may be located nearby the drill hole, but in anyway, outside the drill hole.

According to an embodiment, the magnetometers are mounted to the rock drilling rig. Then the magnetometers may be mounted on a carrier, to a drilling boom or to a drilling unit, for example. Further, the magnetometers may be mounted to arms so that they may be located at greater lateral distance from the drilling tool. Thanks to the arms the magnetometers may be positioned at desired locations around the drilling tool. The mentioned arms may be movable so that the position and distance relative to the drilling tool may be changed. The arms may also have a retracted transport or storage position and an extended sensing or operational position.

According to an embodiment, the disclosed solution utilizes three directional magnetometers capable sensing magnetic flux in three components, x, y and z components. When position and orientation of the magnetometers is known by the measuring system, then selected sensed components may be examined when determining the phase angles.

According to an embodiment, in addition to the detected two-dimensional change of position of the magnetic source also a third dimension is included. Thus, drilling depth is measured and is included in the examination. This way three-dimensional position data can be produced. The drilling depth may also be called as an advance distance.

According to an embodiment, the data on advanced distance is produced by means of a distance sensing device external to the apparatus. There are several alternative ways and principles for sensing the drilling depth.

According to an embodiment, the distance sensing device is mounted to a drilling unit of the rock drilling rig. The drilling unit manipulates the drilling components during the drilling and the distance sensing unit locating in the drilling unit may monitor feeding of the drilling components.

According to an embodiment, the distance sensing device is configured to determine distance between the drill bit and a drill hole opening or mouth.

According to an embodiment, the solution aims to detect bending of the drilling tool during the drilling and the caused deviations in straightness of the drilled hole. In order to detect the bending, several measurements at different drill hole depths needs to be executed. Then several measuring points locating at different advance distances of the magnetic source inside the drilled hole are used. The number and depth of the measuring points may be selected case by case. At each measuring point sensing data received from the magnetometers is analyzed and position data is calculated. The control unit compares the calculated position data and determines the bending on the basis of the detected differences in the calculated position data.

According to an embodiment, the determined data on bending is implemented in determining quality of the rock drilling and determining quality of the finished drill hole.

According to an embodiment, the determined data on bending is implemented during the drilling for initiating and controlling corrective measures. The corrective measures may include directional drilling, wherein the drilling is actively steered for compensating the detected bending of the drilling tool and the drilled hole. A still possible implementation is to steer the drilling tool purposely so that it becomes bent, and to thereby produce drill holes with desired non-linear advance profile or side profile.

According to an embodiment, the control unit is configured to produce coordinate data on the changed position of the magnetic source. Then the control unit is provided with data on coordinates of the magnetometers in a work site coordinate system.

According to an embodiment, the above mentioned work site coordinate system may be a mine coordinate system or a project coordinate system.

According to an embodiment, the above mentioned position data with the coordinates may be linked via the work site coordinate system to a drilling plan, charging plan or reinforcing plan.

According to an embodiment, the control unit is configured to calculate position of a face surface of the drilling tool in response to the input position data of the magnetic source relative to the face surface, whereby the position of the drilling tool is examined as the position of the face surface.

According to an embodiment, position of the above mentioned face of the drilling tool equals to position of a bottom of the drill hole during the drilling phase. Position of the drill hole bottom is important especially when charging the drilled hole with explosives.

According to an embodiment, the control unit is provided with one or more processors configured to execute a position detection algorithm execution of which is configured to calculate the position of the magnetic source in response to the received sensing data of the magnetometers and the input position data.

According to an embodiment, the mentioned position detection algorithm, computer program product or software is configured to implement triangulation and trigonometry in the calculation.

According to an embodiment, the control unit is configured to execute the position determination without comparing strength of the detected magnetic fields.

According to an embodiment, strength of the detected magnetic field has no importance to the position detection since the detection is based on determining phase angles of the sensed magnetic fields. The rotating magnetic source generates the alternating magnetic field which is sensed by the magnetometers locating at different positions. The rotating magnetic field is aligned with the magnetometers at different phases. When at least three phase angles are detected, then the new location can be calculated.

According to an embodiment, the magnetometers may be located at different distances from the drill hole, and further, the rock material surrounding the drill hole may have different properties. Therefore the strength of the magnetic field detected by the separate magnetometers is different. When the position detection is based on the phase angle, and not to strength of the magnetic field, then attenuation of the magnetic field in the rock material has no influence to the disclosed positioning sensing procedure.

According to an embodiment, the magnetic source is a permanent magnet. The permanent magnet is inexpensive and its mounting to the drilling tool is relatively simple.

According to an embodiment, the magnetic source is an electromagnet or a coil.

According to an embodiment, the magnetic source is mounted to a drill bit locating at a distal end of the drilling tool.

According to an embodiment, the magnetic source is mounted to a drill rod or tube.

According to an embodiment, the magnetic source is mounted to an adapter piece which is located between the drill bit and the drill rod or tube. The adapter piece may be a component that is designed especially for receiving the one or more magnetic sources.

According to an embodiment, the magnetic source is covered or surrounded with non-ferromagnetic material. The material may be resilient material and may thereby serve as protective material layer. The surrounding material may dampen forces directed to the magnetic source during the operation and may thereby lengthen life time of the magnetic source. Especially in percussion drilling the dampening feature may be found useful. The magnetic field penetrates well through the non-ferromagnetic material.

According to an embodiment, when the drilling tool or its drilling component is made of ferromagnetic material, it may comprise a recess on its radial outer surface for receiving the magnetic source together with surrounding non-ferromagnetic filling material. When a special adapter element is applied between the drill bit and a drill rod or tube, then the adapter may be made of stainless steel, or another non-ferromagnetic steel material.

According to an embodiment, the disclosed apparatus and solution may be implemented for examining straightness of the already drilled drill holes. Then the drilling tool with the magnetic source is positioned at a mouth opening of the drill hole. Thereafter the drilling tool is moved longitudinally to desired one or more drill hole depths and change of position of the drilling tool and the magnetic source is calculated as it is disclosed in this document.

According to an embodiment, the disclosed apparatus and solution may be implemented in detection of the drill hole straightness without calculating absolute positions of the magnetic source. Instead of the calculated position coordinates the control unit may be provided with a limit value for the maximum deviation of the phase angle or phase difference between two measurements. When the limit value is exceeded then the drilling may be terminated, a warning signal may be generated or corrective measures may be initiated.

According to an embodiment, the disclosed measuring principle may be implemented in connection with a special measuring means. Then the magnetic source is mounted to a measuring instrument, probe, component or element which may be rotated around its longitudinal axis and may be moved in longitudinal direction inside a drill hole. In other words, this special embodiment, which is not in accordance with the present invention defined in the claims of this document, does not include any drilling tool. The disclosed embodiment may be a special measuring device intended for measuring straightness of the already drilled drill holes.

The above disclosed embodiments may be combined in order to form suitable solutions having those of the above features that are needed.

### Brief description of the figures

Some embodiments are described in more detail in the accompanying drawings, in which
Figure 1 is a schematic side view of a rock drilling rig,
Figure 2 is a schematic diagram presenting components of the disclosed apparatus,
Figure 3 is a schematic side view of a drilling tool and its components provided with magnetic sources,
Figure 4 is a schematic side view of a drilling tool at a bottom of a drill hole,
Figure 5 is a schematic side view of a magnetic source surrounded by means of non-ferromagnetic protection material,
Figure 6 is a schematic diagram showing a control unit intended for executing position detection,
Figure 7 is a highly simplified schematic view showing a principle of triangulation utilized in the disclosed measuring system,
Figure 8 is a schematic top view of a measuring arrangement comprising three magnetometers and a magnetic source mounted to a rotating drilling tool,
Figure 9a and 9b are schematic diagrams relating to Figure 8 and demonstrating calculation of the initial position and the changed position of the drilling tool,
Figure 10 is a schematic graph of magnetic field measurements taken by two magnetometers and determination of a phase angle,
Figure 11 is another schematic graph of magnetic field measurements taken by other two magnetometers and determination of a phase angle,
Figure 12 is a schematic view showing that magnetometers may be positioned at different distances and directions from a drill hole,
Figure 13 is a schematic side view of a measuring arrangement for detecting drill hole straightness, and
Figure 14 is a schematic side view showing an alternative mounting arrangement for magnetometers.

For the sake of clarity, the figures show some embodiments of the disclosed solution in a simplified manner. In the figures, like reference numerals identify like elements.

### Detailed description of some embodiments

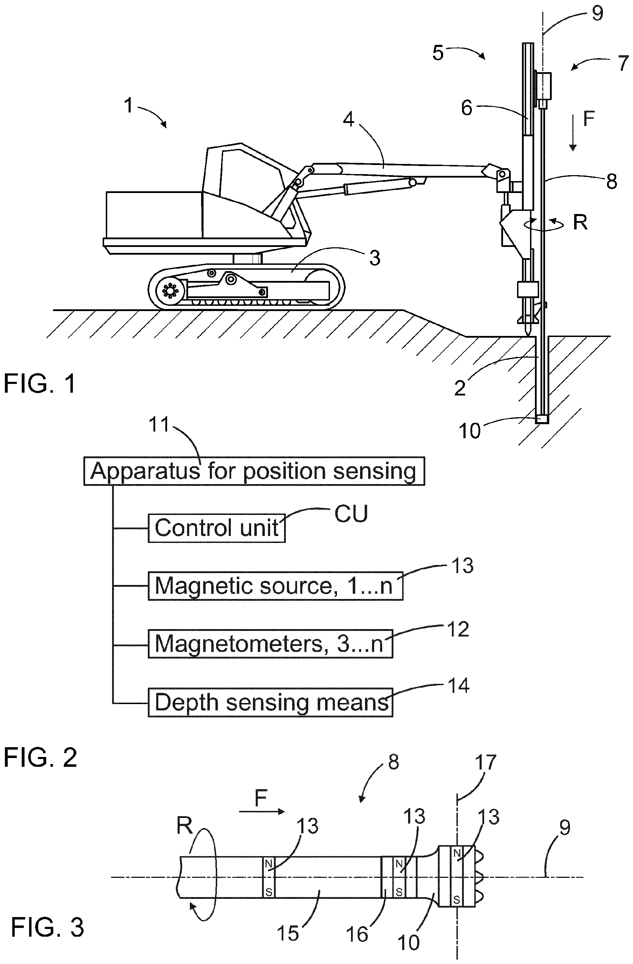

Figure 1 shows a rock drilling rig 1 for drilling drill holes 2. The rock drilling rig 1 comprises a movable carrier 3 and one or more drilling booms 4 connected to the carrier 3. The drilling boom 4 is provided with a drilling unit 5 comprising a feed beam 6 and a rock drilling machine 7 supported movably on it. A drilling tool 8 is connectable to the rock drilling machine 7 and may rotated R around drilling axis 9 by means of a rotation device of the rock drilling machine 7. At a distal end of the drilling tool 8 is a drill bit 10. The rock drilling machine 7 may comprise a percussion device for generating impact pulses to the drilling tool 8. The percussion device may be located either in connection with the drilling machine 7 or at a distal end portion of the drilling tool, whereby the percussive rock drilling may be top hammer drilling or down-the-hole drilling. A further alternative is that the drilling is rotary drilling without percussion. The rock drilling machine 7 is fed F during the drilling by means of a feed device, which is not disclosed in Figure 1.

The rock drilling rig 1 of Figure 1 is intended for vertical surface drilling and may be equipped with the apparatus disclosed in this document. However, the solution of Figure 1 is only one drilling application. The disclosed solution may also be utilized in other drilling solutions such as in long hole drilling, face drilling, bench drilling etc.

Figure 2 discloses an apparatus 11 for positioning sensing of a drilling tool. The apparatus 11 comprises one or more control units CU for analysing sensing data received from three or more magnetometers 12. The apparatus 11 further comprises one or more magnetic sources 13 mounted to a rotatable drilling tool. The apparatus 11 may also be provided with depth sensing means 14 for determining advance distance of the magnetic source inside a drill hole.

Figure 3 discloses a drilling tool 8, which may comprise several drilling components connected to each other. The drilling tool 8 may comprise one or more drilling rods 15 or tubes and a drill bit 10. Between the rod 15 and the drill bit 10 may be an adapter piece 16. At least one of the components 15, 16, 10 is provided with at least one magnetic source 13. The magnetic source 13 is mounted so that axis of magnetic field 17 is transverse to drilling axis 9 of the drilling tool 8. It is possible to use several magnetic sources 13 in one component or provide several components with them.

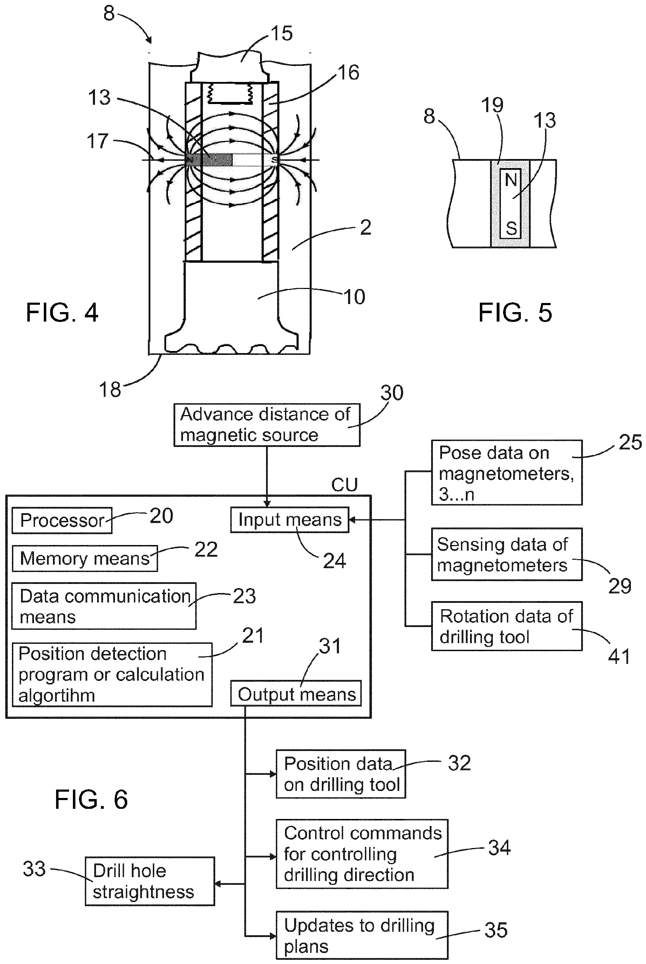

Figure 4 discloses a distal end part of a drilling tool 8. Between a drill bit 10 and a drill rod 15 is an adapter piece 16 made of non-ferromagnetic material and comprising a permanent magnet 13. Then the magnet 13 is close to a face of the drill bit and a bottom 18 of a drill hole 2. Distance between the magnet 13 and the bottom 18 is known and position of the drill hole bottom 18 may be thereby sensed by the disclosed solution.

Figure 5 discloses that around a magnetic source 13 may be protective material 19, which may be of non-ferromagnetic material. The protective material 19 may dampen mechanical forces directed to magnetic source 13 and may also encapsulate it against harsh conditions occurring inside the drill hole. The protective material 19 may also participate to fastening of the magnetic source 13.

Figure 6 discloses a control unit CU comprising a processor 20 for executing a position detection program 21 input to the control unit CU. The control unit CU further comprises memory means 22 for storing programs and data, and data communication means 23 for communicating with servers and other control units, such as with a drilling control unit of a rock drilling rig or with a mine control system. The control unit has input means 24 for receiving position and orientation data, i.e. pose data on magnetometers 25. When the position of the drilling tool is tracked, sensing data produced by the magnetometers 29 is input to control unit CU. Also data on advance distance of the tracked magnetic source 30 may be input. The control unit analyses the input data and outcomes of the analysis and calculations executed by the processor 20 are transmitted through output means 31 to desired systems, servers and control units. The control unit CU may produce position data on the drilling tool 32, data on drill hole straightness or bending of the drilling tool 33, control commands for steering and controlling the drilling process 34 and updates 35 to drilling patterns, excavation plans and charging plans, for example.

Figure 6 further discloses that rotation data 41 of the drilling tool and the included magnetic source may be sensed and input to the control unit CU. The rotation data 41 may be determined by means of separate sensing devices which are located in connection with the drilling unit. The rotation data 41 of the drilling is known by the system since rotation is one control parameter of the drilling process. However, the rotation data 41 may also be determined by analyzing sensing results received from the magnetometers.

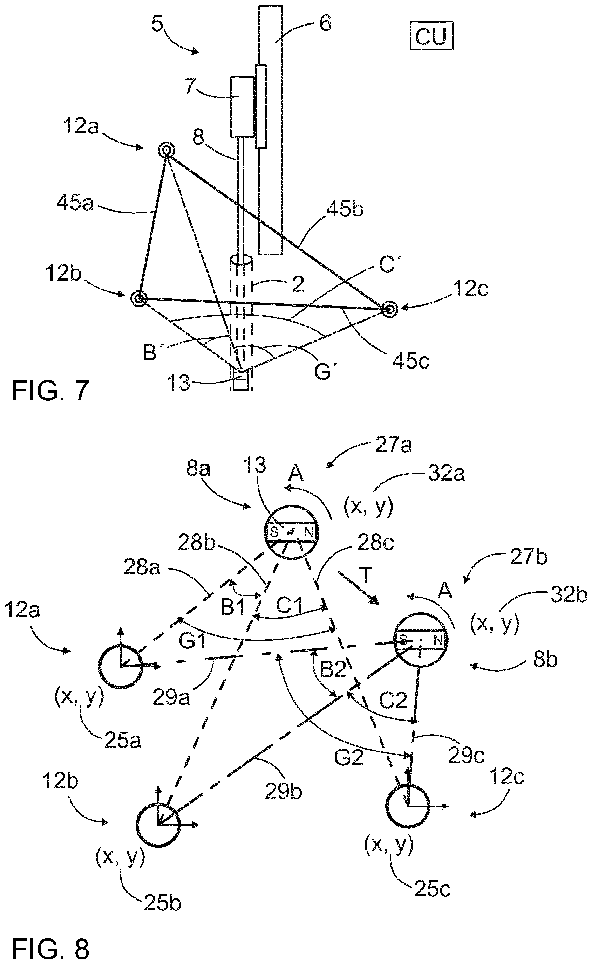

Figure 7 illustrates a principle of triangulation, which may be implemented in the disclosed position detection system. A drilling unit 5 provided with a feed beam 6 and a rock drilling machine 7 is positioned to a drilling position and drilling tool 8 has penetrated inside rock material. Then a drill hole 2 is formed. Inside the drill hole 2 is rotated together with the drilling tool 8 a magnetic source 13 accurate position of which may not be known after a drilling period. However, positions of several magnetometers 12a - 12c are known whereby lengths of sides 45a, 45b and 45c of a formed basic triangle 46 can be calculated. Further, angles B, C and G from the magnetic source 13 towards the magnetometers 12a - 12c are detected by analyzing phase differences between the received sensing data, as it is disclosed in this document. In Figure 7 the phase angles B', C' and G' are only for illustrative purposes since the actual phase angles are examined as projections to the x-y plane defined by the magnetometers. Thus, a control unit CU is provided with sufficient and accurate data for calculating the position of the magnetic source 13 in x-y plane and in relation to the positions of the magnetometers 12a - 12c.

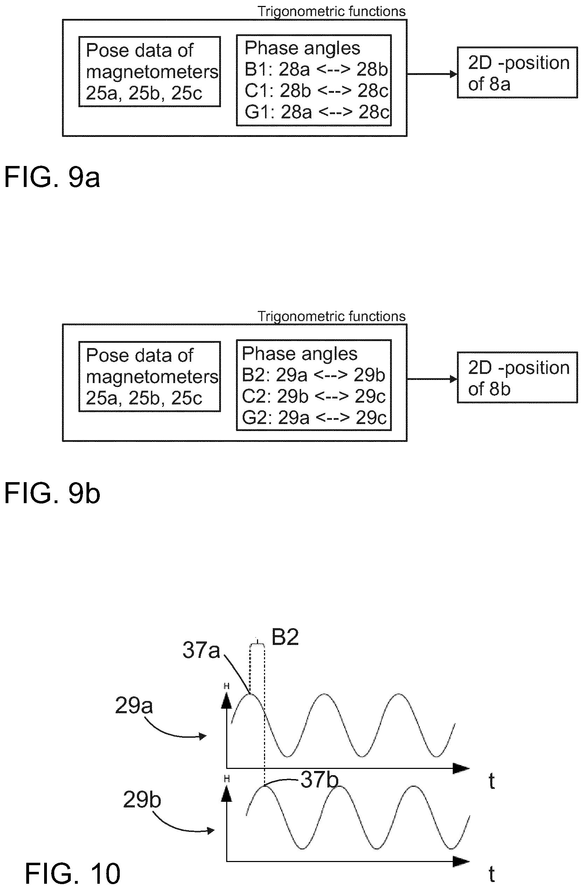

Figure 8 illustrates the disclosed measuring principle wherein a drilling tool 8a provided with a magnetic source 13 is rotated at a first location 27a and rotation angles A can be sensed by means of magnetometers 12a - 12c. Then the rotating magnetic field is sensed by the magnetometers 12a - 12c and sensing data 28a - 28c is generated at the first location 27a. Phase angles B1, C1 and G1 are determined by analyzing and comparing the sensing data. Thereby position data 32a of the first position 27a can be calculated. If so desired, the first position data 32a may be generated before the actual drilling is initiated, whereby the result may be compared to position data generated by a basic positioning system of the rock drilling rig. During the actual drilling, sensing data 29a - 29c is produced by the magnetometers 12a - 12c. The drilling tool 8b may be subjected transverse directed force components and may be forced to change its position from the intended position 27a in the examined plane and may move T transversally to a new position 27b. In the new position 27b alignment between the magnetic source 13 and the magnetometers 12a - 12c is changed whereby also the phase angles B1, C1 and G2 are changed. New phase angles B2, C2 and G2 can be determined by examining the new sensing data 29a - 29c. Since positions 25a - 25c of the magnetometers 12a - 12c is known by the tracking system, position data 32a of the first position 27a and position data 32b of the new position 27b can be calculated. Figures 9a and 9b further illustrate the position determination principle. The actual calculation is based on normal trigonometry which is well known by a man skilled in the art and is therefore not disclosed in detailed here.

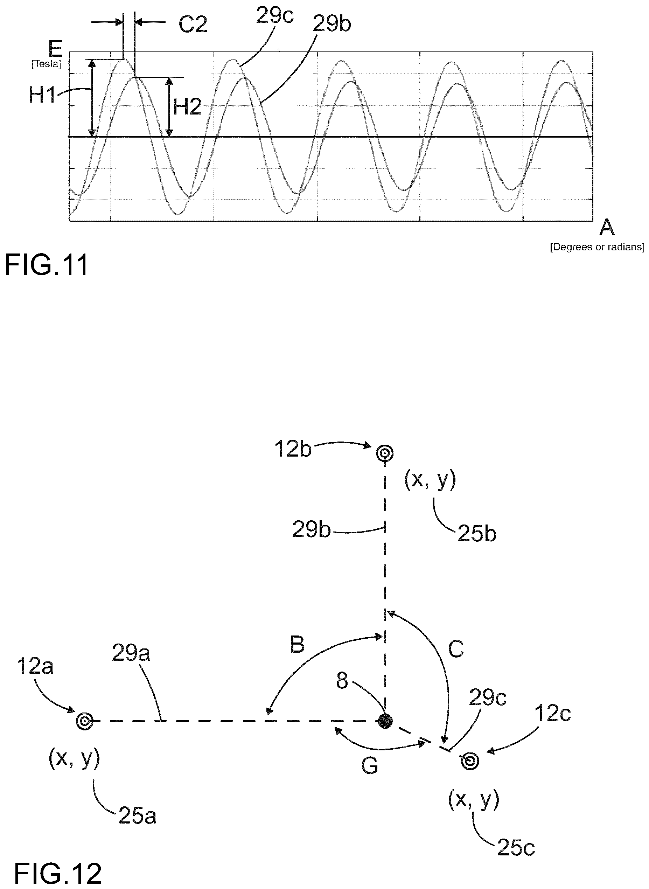

In Figures 8 and 12 lines 28a - 28c and 29a - 29b are used only to illustrate the sensing data. The actual sensing data comprises signals and has typically sine wave form as it is disclosed in Figures 10 and 11. Thus, Figures 8 and 12 are simplified presentations for improving understanding the disclosed solution.

Figure 10 discloses graphs of two sensing data 29a and 29b received by magnetometers 12a and 12b. In other words, one pair of graphs is presented for comparison. Magnitude or strength H of the sensed magnetic field in relation to time is illustrated. As can be noted the sensing data 29a, 29b can be illustrated as sine waves. When examining the sine waves, for example peak values 37a and 37b, it can be noted that there is a shift in the peak values 37a, 37b. In other words, the curves have a phase difference. The phase difference corresponds to a phase angle B2. The other two phase angles C2 and G2 can be illustrated and determined in the similar manner.

Figure 11 discloses readings or output of magnetometers 12b and 12c in function to a rotation angle A of the magnetic source. Sinus waves 29b and 29c have a different phase angle C2. The phase angle C2 can be determined despite the fact that amplitudes H1 and H2 i.e. strengths of the magnetic fields at the reference point and at the new changed location are different. Thus, Figure 11 illustrates that the position determination can be done without examining strength values of the magnetic fields. In other words, values of magnetic flux density E, i.e. sensed Tesla [T], have no significant importance to the determination of the phase angles.

Figure 12 is another example of the disclosed measuring arrangement. As can be noted, the magnetometers 12a - 12c may be located at different directions and distances relative to a drilling tool 8.

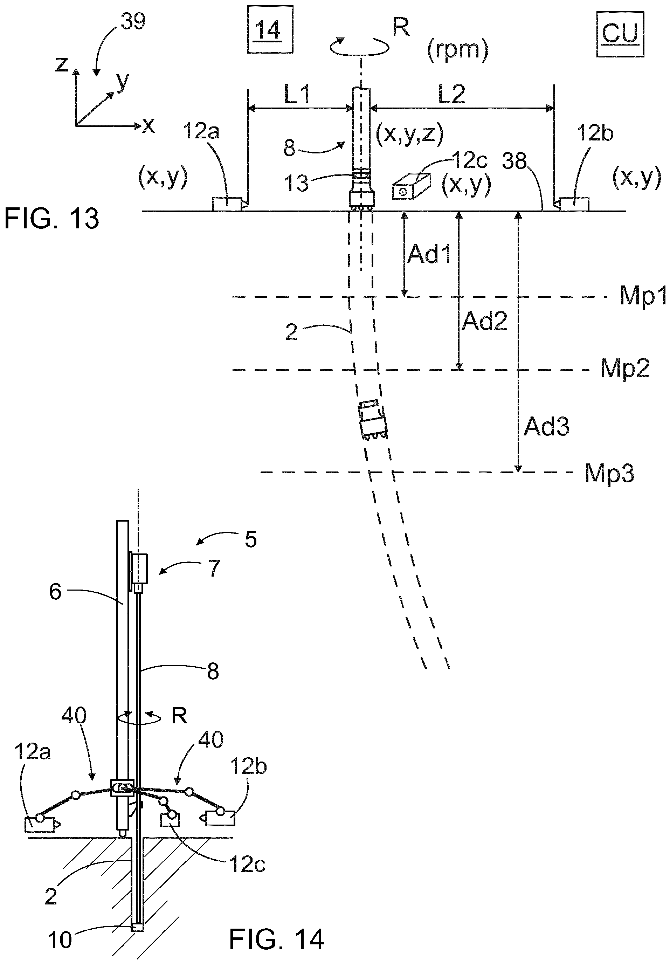

Figure 13 discloses a measuring principle for determining bending of a drill hole 2. A drilling tool 8 is positioned at a start point of a drill hole. Positioning system of rock drilling rig knows accurate position of the drilling tool at the start point. Magnetometers 12a - 12c are mounted on a rock surface 38 and they may be located at different distances L1 and L2 from the drilling tool 8. Positions of the magnetometers 12a - 12c and the drilling tool 8 positioned to the starting point can be determined in a work site coordinate system 39, for example. When the drilling begins, position of the drilling tool 8 is determined by examining rotating magnetic field generated by a magnetic source 13. Simultaneously advance distance of the drilling tool 8 is sensed by means of a sensor 14. When the position measurements are execute at several measuring points Mp1 - Mp3 positions at different advance distances Ad1 - Ad3 is detected. On the basis of the obtained data, straightness of the drill hole 2 can be examined in a control unit CU.

Figure 14 discloses a solution, wherein magnetometers 12a - 12c are connected to a drilling unit 5 by means of arms 40. The arms 40 may be movable and may comprise joints.

The drawings and the related description are only intended to illustrate the idea of the invention. In its details, the invention may vary within the scope of the claims.

## Claims

1. An apparatus (11) for detecting change of position of a drilling tool (8) of a rock drilling rig (1) during drilling when the drilling tool (8) is rotated (R) around its longitudinal drilling axis (9);
the apparatus (11) comprising:
at least one magnetic source (13) mounted to the rotatable drilling tool (8) and configured to generate rotating magnetic field, and wherein direction of axis (17) of the magnetic field deviates from the drilling axis (9);
at least one magnetometer (12) configured to sense the magnetic field generated by the magnetic source (13); and
at least one control unit (CU) configured to receive sensing data from the magnetometers (12) and is configured to examine the rotating magnetic field;
**characterized in that**
the apparatus (11) comprises at least three magnetometers (12a - 12c), which are all located external relative to the drilling tool (8);
the control unit (CU) is provided with data (25) on position and orientation of the magnetometers (12);
the control unit (CU) is configured to detect phase differences between the sensing data (29) received from the magnetometers (12);
the control unit (CU) is configured to determine phase angles (B, C, G) between the magnetometers (12) and the rotating magnetic source (13) in response to the detected phase differences; and
the control unit (CU) is configured to calculate data on position (32) of the drilling tool (8) on the basis of the detected phase angles (B, C, G) and the input positions and orientations (25) of the magnetometers (12).

2. The apparatus as claimed in claim 1, **characterized in that**
the control unit (CU) is configured to implement triangulation in the position calculation of the drilling tool (8).

3. The apparatus as claimed in claim 1 or 2, **characterized in that**
the control unit (CU) is configured to examine the received sensing data (29) by determining maximum strengths of the received magnetic field values and to determine corresponding rotation angle (A) of the magnetic source (13) relative to the examined magnetometer (12a -12c); and
the control unit (CU) is configured to determine the phase angles (B, C, G) between the sensing data (28) by comparing the determined rotation angles (A) of the detected maximum strength values.

4. The apparatus as claimed in any one of the preceding claims 1 - 3, **characterized in that**
the magnetometers (12) are located on a rock surface (38) surrounding the drill hole (2) being drilled.

5. The apparatus as claimed in any one of the preceding claims 1 - 4, **characterized in that**
the control unit (CU) is provided with data on advanced distance (30) of the magnetic source (13) inside the drilled hole (2); and
the control unit (CU) is configured to calculate three dimensional position data on the magnetic source (13) in response to the detected position (32) and the received data on the advance distance (30).

6. The apparatus as claimed in any one of the preceding claims 1 - 5, **characterized in that**
the control unit (CU) is provided with sensing data from the magnetometers (12) at several measuring points (Mp) locating at different advance distances (Ad) of the magnetic source (13) inside the drilled hole (2); and
the control unit (CU) is configured to compare the calculated position data of the several measuring points (Mp) and is configured to determine bending of the drilling tool (8) in response to detected deviations in the position data.

7. The apparatus as claimed in any one of the preceding claims 1 - 6, **characterized in that**
the control unit (CU) is provided with data on coordinates of the magnetometers (12) in a work site coordinate system (39); and
the control unit (CU) is configured to calculate coordinates of the magnetic source (13) in the work site coordinate system (39).

8. The apparatus as claimed in any one of the preceding claims 1 - 7, **characterized in that**
the control unit (CU) is provided with a processor (20) configured to execute a position detection algorithm (21) execution of which is configured to calculate the position of the magnetic source (13) in response to the received sensing data (29) of the magnetometers (12) and the input position data (25).

9. The apparatus as claimed in any one of the preceding claims 1 - 8, **characterized in that**
the control unit (CU) is configured to execute the position determination without comparing strength of the detected magnetic fields.

10. The apparatus as claimed in any one of the preceding claims 1 - 9, **characterized in that**
the magnetic source (13) is a permanent magnet.

11. The apparatus as claimed in any one of the preceding claims 1 - 10, **characterized in that**
the magnetic source (13) is mounted to a drill bit (10) locating at a distal end of the drilling tool (8).

12. A rock drilling rig (1), comprising:
a movable carrier (3);
at least one drilling boom (4) connected movably to the carrier (3) and equipped with a rock drilling unit (5);
and wherein the rock drilling unit (5) comprises a feed beam (6) and a rock drilling machine (7) supported movably on the feed beam (6);
**characterized in that**
the rock drilling rig (1) is provided with at least one apparatus (11) for determining position of the drilling tool (8) connectable to the drilling unit (5);
and wherein the apparatus (11) is in accordance with the previous claims 1 - 11.

13. A method of determining position of a drilling tool of a rock drilling rig during drilling operation,
wherein the method comprises:
rotating (R) the drilling tool (8) around its longitudinal drilling axis (9) during the drilling and feeding (F) the drilling tool (8) axially forward in an advance direction;
detecting position of the drilling tool (8) during the drilling by means of an apparatus (11) comprising at least one magnetic source (13) mounted to the rotating drilling tool (8) and at least one magnetometer (12);
generating a rotating magnetic field by rotating (R) the magnetic source (13) together with the drilling tool (8); and
sensing the rotating magnetic field by means of the at least one magnetometer and producing sensing data (29);
**characterized by**
implementing at least three magnetometers (12a - 12c) in the sensing and generating at least three sensing data (29a - 29c);
executing comparison between the generated sensing data (29a - 29c) and determining phase differences and phase angles (B, C, G);
calculating position of the magnetic source (13) relative to known poses (25) of the magnetometers (12a - 12c) on the basis of the determined phase angles (B, C, G)

14. The method as claimed in claim 13, **characterized by**
sensing advanced distance (Ad) of the magnetic source (13) inside the drilled hole (2) during the drilling;
repeating the position measurement at several measuring points (Mp) having different depths in the drill hole (2); and
comparing the calculated positions of the drilling tool (8) at the several measuring points (Mp) and determining straightness of the drill hole (2) in response to the comparison.

15. A computer program product (21) **characterized in that**
the computer program product (21) comprises program code means configured to execute the steps and procedures disclosed in the independent claims when being run on a computer or a data processing device (20).
